# EUROPEAN PATENT SPECIFICATION

(11) **EP 3 364 332 B1**
(45) Date of publication and mention of the grant of the patent: **28.10.2020**
(21) Application number: 15909016.6
(22) Date of filing: 23.11.2015
(51) Int. Cl.: G06F 21/70, H01R 13/629, H01R 13/639

(54) **ELECTRONIC DEVICE**
ELEKTRONISCHE VORRICHTUNG
DISPOSITIF ÉLECTRONIQUE

(43) Date of publication of application: 22.08.2018
(73) Proprietor: Huawei Technologies Co., Ltd., Longgang District Shenzhen, Guangdong 518129 (CN)
(72) Inventor: ZHU, Xin, Shenzhen Guangdong 518129 (CN); CHANG, Chia Huan, Shenzhen Guangdong 518129 (CN); CHEN, Mingjun, Shenzhen Guangdong 518129 (CN); LIU, Tianhua, Shenzhen Guangdong 518129 (CN); LEI, Gaobing, Shenzhen Guangdong 518129 (CN)
(74) Representative: Gill Jennings & Every LLP
(86) International application number: PCT/CN2015/095349
(87) International publication number: WO 2017/088103

(56) References cited:
- CN-A- 104 380 304
- CN-A- 104 380 304
- CN-U- 202 495 630
- CN-U- 203 574 181
- TW-U- 452 266
- US-A1- 2001 036 759
- US-A1- 2015 333 444
- US-B1- 6 364 674

## Description

### TECHNICAL FIELD

The present invention relates to the field of communications technologies, and more specifically, to an electronic device.

### BACKGROUND

Currently, a card is removed from a mobile phone mainly in two manners: One is push-push (PUSH-PUSH), and the other is a manner of removing a card by using an eject tool with support of a card tray. The following is described by using a SIM card as an example.

A card may be locked to a read position by using a push-push SIM card holder and repeatedly pressing the card along an insertion direction. In a design of a push-push SIM card holder, for a portable electronic apparatus that is designed with a removable battery, the SIM card holder is usually disposed beneath the phone battery, and a user needs to remove a battery cover before inserting or removing a SIM card; for a portable electronic apparatus that is designed with a built-in battery, a SIM card insertion and removal position is located on a side of a phone body, and a dust cap needs to be unbuckled when a SIM card is to be inserted or removed.

The manner of removing a card by using an eject tool with support of a card tray is to place the SIM card on the card tray and then push the card tray into a card holder of the mobile phone; to pull out the card tray, the eject tool is inserted into an eject tool hole disposed on a phone housing, and an internal ejecting structure of the card holder ejects the card tray and the loaded card together.

The existing push-push SIM card holder needs a removable back cover or a plastic middle frame to fit a dust cap, and this affects an overall aesthetic effect of the mobile phone. In addition, the manner of removing a card by using an eject tool with support of a card tray needs support of the eject tool, and if the eject tool is lost or forgotten, a SIM card cannot be removed when card removal is required in an emergency. Therefore, existing solutions cannot take into account a consumer's both requirements of being aesthetic and removing a card without using a tool.

CN 104380304, US 2015/333444, and US 6364674 all disclose methods for removing cards from an electronic device.

To resolve the technical problems, the present invention provides an electronic device, so as to facilitate card installation or removal of the electronic device and improve use convenience.

To achieve the foregoing objective, the present invention provides an electronic device, comprising:
a card holder, a card tray, a processing chip, and an unlocking structure, wherein a slot that accommodates the card tray is disposed on the card holder, and at least one locking structure is disposed in the slot;
the unlocking structure comprises an electromagnet, the unlocking structure is connected to the processing chip, the card tray is configured to accommodate a card of the electronic device, and at least one locking part that fits the locking structure is disposed on the card tray; and
the processing chip is configured to: when a card removal operation signal is received, verify a user identity, and when the user identity verification succeeds, control the unlocking structure to release the card tray, wherein the user identity verification is implemented by using any one or combination of a password, a fingerprint, an iris, voice, or appearance, wherein:
   the unlocking structure further comprises a first pull lever, a first shift lever, a spring, and a mounting hole;
   a first end of the spring is fastened in the mounting hole, and a second end of the spring is connected to a first end of the first pull lever;
   a second end of the first pull lever is hinged to the first shift lever, and the first shift lever is fastened on the card holder through a first shaft;
   a magnetic component is fastened on a position that is on the first pull lever and opposite to the electromagnet; and
   the controlling the unlocking structure to release the card tray comprises: changing a power status of the electromagnet, so that a magnetic attraction force from the electromagnet to the magnetic component is less than a resilience force of the spring, the first pull lever moves towards the bottom of the slot under an effect of the resilience force of the spring, the first shift lever is driven by the first pull lever to rotate around the first shaft, and the card tray is ejected under pushing of the first shift lever.

The invention also provides a method of removing a card of an electronic device, the method comprising:
receiving a card removal operation signal;
verifying a user identity, and when the user identity verification succeeds, controlling an unlocking structure to release a card tray of the electronic device, wherein the user identity verification is implemented by using any one or combination of a password, a fingerprint, an iris, voice, or appearance;
wherein the electronic device comprising a card holder, an unlocking structure, wherein a slot that accommodates the card tray is disposed on the card holder, and at least one locking structure is disposed in the slot;
and the unlocking structure comprises an electromagnet, the unlocking structure is connected to the processing chip, the card tray is configured to accommodate a card of the electronic device, and at least one locking part that fits the locking structure is disposed on the card tray, wherein:
   the unlocking structure further comprises a first pull lever, a first shift lever, a spring, and a mounting hole;
   a first end of the spring is fastened in the mounting hole, and a second end of the spring is connected to a first end of the first pull lever;
   a second end of the first pull lever is hinged to the first shift lever, and the first shift lever is fastened on the card holder through a first shaft;
   a magnetic component is fastened on a position that is on the first pull lever and opposite to the electromagnet; and
   the controlling the unlocking structure to release the card tray comprises: changing a power status of the electromagnet, so that a magnetic attraction force from the electromagnet to the magnetic component is less than a resilience force of the spring, the first pull lever moves towards the bottom of the slot under an effect of the resilience force of the spring, the first shift lever is driven by the first pull lever to rotate around the first shaft, and the card tray is ejected under pushing of the first shift lever.

According to the electronic device provided in the present invention, when a user inserts a card, a card tray is locked by a locking structure; and when the card needs to be removed, a processing chip receives a card removal operation signal, verifies a user identity, and controls, when the user identity verification succeeds, an unlocking structure to release the card tray. In this way, the user can complete a card removal operation without a need to open a back cover or a cover plate. In addition, the card removal operation requires authentication on the user identity, and this improves security of the electronic device.

### BRIEF DESCRIPTION OF DRAWINGS

FIG. 1 is a schematic diagram of an electronic device according to an embodiment of the present invention;
FIG. 2 is a schematic structural diagram of a card tray according to an embodiment of the present invention;
FIG. 3 is a schematic diagram in which a card tray is inserted into a card holder according to an embodiment of the present invention;
FIG. 4 is a schematic diagram of unlocking and control parts according to an embodiment of the present invention;
FIG. 5 is a schematic structural diagram of an electronic device whose card tray is in a locked state according to Embodiment 1 of the present invention;
FIG. 6 is a schematic structural diagram of an electronic device whose card tray is in an unlocked state according to Embodiment 1 of the present invention;
FIG. 7 is a schematic structural diagram of an electronic device whose card tray is in a locked state according to a first background example;
FIG. 8 is a schematic structural diagram of an electronic device whose card tray is in an unlocked state according to the first background example;
FIG. 9 is a schematic structural diagram of an electronic device whose card tray is in a locked state according to a second background example;
FIG. 10 is a schematic structural diagram of an electronic device whose card tray is in an unlocked state according to the second background example;
FIG. 11 is a schematic structural diagram of an electronic device whose card tray is in a locked state according to a third background example; and
FIG. 12 is a schematic structural diagram of an electronic device whose card tray is in an unlocked state according to the third background example.

### DETAILED DESCRIPTION

Embodiments of the present invention provide an electronic device, so as to facilitate card installation or removal of the electronic device and improve use convenience.

The following describes embodiments of the present invention and background examples useful for understanding the invention in detail with reference to accompanying drawings. It should be understood that the specific embodiments described herein are merely used for describing the present invention, but are not intended to limit the present invention.

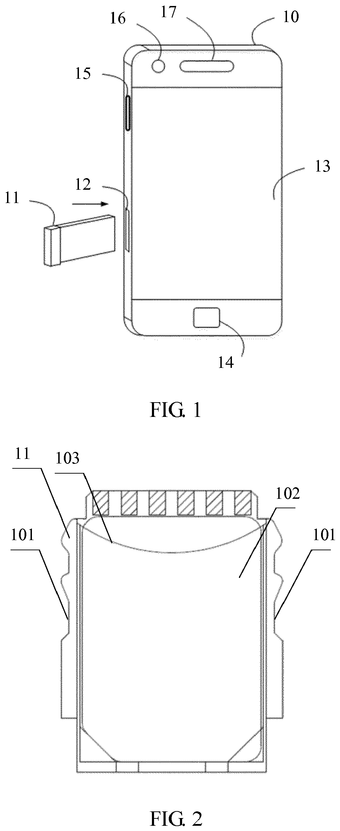

FIG. 1 is a schematic diagram of an electronic device according to an embodiment of the present invention. An electronic device 10 may be a mobile phone, a tablet computer, a laptop computer, or the like. This is not limited in this embodiment of the present invention. Referring to FIG. 1, the electronic device 10 includes a card tray 11, a card holder 12, a touch-sensitive display 13, a fingerprint sensor 14, a power button 15, a camera 16, and a loudspeaker 17.

The fingerprint sensor 14 is usually disposed above, below, or beside a home button (home button) of the electronic device 10. In the following, the fingerprint sensor 14 is used as the home button. In some embodiments, the fingerprint sensor 14 may be disposed on a side of a body of the electronic device 10, or may be disposed on a back of a body of the electronic device 10. This is not limited in this embodiment of the present invention.

The camera 16 includes a lens system, a drive unit, and an image sensor, and may further include a flash memory or the like. The camera 16 converts an optical signal, which is input (or captured) by the lens system, into an electrographic signal or data, and outputs the signal or the data. A user may use the camera 16 to capture a moving image or a still image. In other words, the camera 16 forms an optical image of an object and detects the formed optical image as an electrical signal.

Optionally, the electronic device 10 further includes a microphone (not shown) and a memory (not shown). The microphone is configured to receive voice or audio input and generate an electrical signal. The memory is configured to store a software program and/or an instruction set.

Sometimes, the touch-sensitive display 13 is referred to as a "touchscreen", and may be considered or referred to as a touch-sensitive display system. The touchscreen is configured to display an image, and when a finger or a user input apparatus such as a stylus touches a surface of the touchscreen, cause key touch to interrupt.

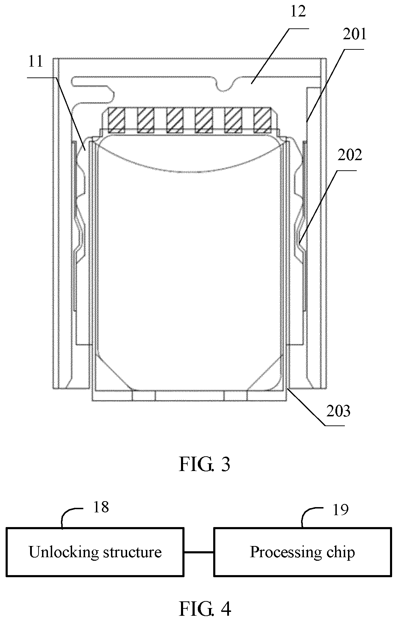

Referring to FIG. 2 and FIG. 3, the card tray mentioned in this embodiment of the present invention is shown in FIG. 1. The card tray 11 includes at least one locking part 101, a shielding cover 102 that covers the card tray, and an opening 103 that facilitates card removal. The card tray 11 is configured to accommodate a card of the electronic device 10 and may store a SIM card, or may store a Micro SIM card, a Nano SIM card, an SD card, a TF card, or another card.

A slot 201 that accommodates the card tray is disposed on the card holder 12, and at least one locking structure 202 is disposed in the slot 201. The card tray 11 is configured to accommodate the card of the electronic device 10, and at least one locking part 101 that fits the locking structure 202 is disposed on the card tray 11. Optionally, referring to FIG. 2 and FIG. 3, the locking part 101 is a groove, and the locking structure 202 is a clamping spring that has a clamping part. When inserting a card, a user pushes the card tray 11 from an opening position 203 of the slot 201 into the card holder 12. A side wall of the card tray 11 touches the clamping spring of the slot 201 and produces an outward elastic force for the clamping spring. Consequently, the clamping spring is deformed, and under a push from the outside, the card tray 11 overcomes a counterforce of the clamping spring, so that the clamping part of the clamping spring stretches into the groove of the card tray 11, thereby completing assembly of the card tray.

Referring to FIG. 4, in this embodiment, the electronic device 10 further includes an unlocking structure 18 and a processing chip 19, and the unlocking structure 18 is coupled to the processing chip 19 by using a bus. The processing chip 19 is configured to run or execute various software programs and/or instruction sets that are stored in the memory, so that the device 10 can implement various functions and process data. In this embodiment, the processing chip 19 is specifically configured to: when a card removal operation signal is received, verify a user identity, and when the user identity verification succeeds, control the unlocking structure 18 to release the card tray 11, where the user identity verification is implemented by using any one or combination of a password, a fingerprint, an iris, voice, or appearance. For example, after a card removal operation signal is received, a password entered by a user may be received by using a soft keyboard of the touch-sensitive display 13 of the electronic device 10, a user's fingerprint may be obtained by using the finger sensor 14, a user's voice instruction may be received by using the microphone (not shown), or a user's iris or appearance feature is captured by using the camera 16. When the user identity verification succeeds, the unlocking structure 18 is controlled to release the card tray 11 and eject the card tray.

The electronic device in this embodiment facilitates card installation or removal and improves use convenience. A user can complete a card removal operation without a need to open a back cover or a cover plate, and therefore, user experience is improved. In addition, the card removal operation requires identity verification, and this improves security of the electronic device.

### Embodiment 1

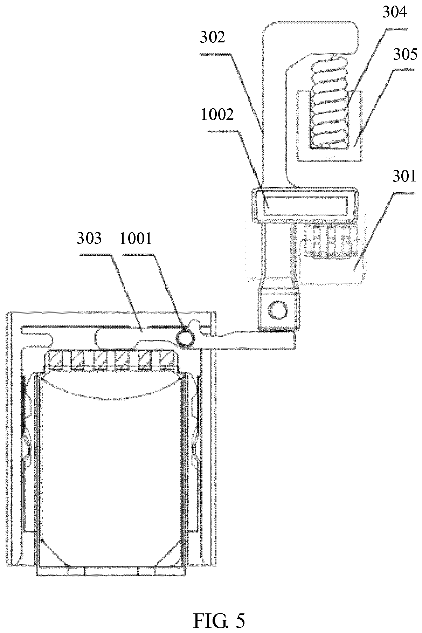

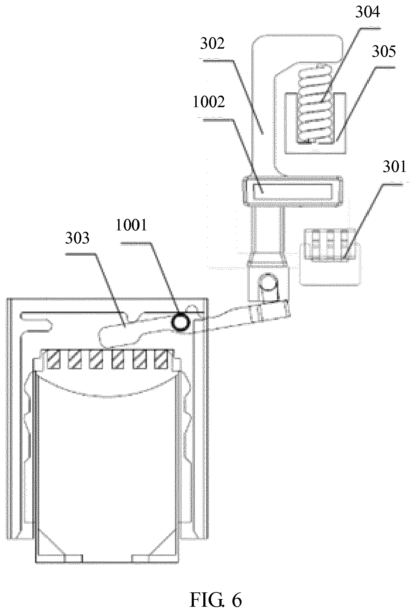

As shown in FIG. 5 and FIG. 6, the unlocking structure 18 includes an electromagnet 301, a first pull lever 302, a first shift lever 303, a spring 304, and a mounting hole 305.

A first end of the spring 304 is fastened in the mounting hole 305, and a second end of the spring 304 is connected to a first end of the first pull lever 302; a second end of the first pull lever 302 is hinged to the first shift lever 303, and the first shift lever 303 is fastened on the card holder through a first shaft 1001. The electromagnet 301 is installed on a circuit board. The processing chip 19 controls an operating state of the electromagnet 301. A coil is disposed inside the electromagnet 301. An electromagnetic force of the electromagnet 301 may be adjusted by changing a current passing through the coil.

Optionally, in this embodiment, the electromagnet 301 is an electropermanent magnet. An electropermanent magnet is a magnet that can be controlled by electric power. Electric power is required only during magnetization or demagnetization. Then, the electropermanent magnet can keep magnetic without electric power. Optionally, in this embodiment, the magnet is a permanent magnet. That is, the magnet can permanently maintain its own magnetism without an applied magnetic field.

A magnetic component 1002 is fastened on a position that is on the first pull lever 302 and opposite to the electromagnet 301. Two pole surfaces of the electromagnet 301 are opposite to two pole surfaces of the magnetic component 1002. When no electricity is connected, magnetic poles (S and N) are opposite to opposite magnetic poles (S and N) of the magnetic component 1002. When no electricity is connected, a magnetic attraction force from the electromagnet 301 to the magnetic component 1002 drives the first pull lever 302 to move towards an opening of the slot, and the spring 304 is compressed to accumulate kinetic energy for a card removal operation, and at the same time, the first shift lever 303 rotates around the first shaft 1001.

In an optional implementation of this embodiment, during card removal, after a card removal operation signal is received, the processing chip 19 changes a power state (that is, controls a current of the coil) of the electromagnet 301, so that the electromagnet 301 enters a non-magnetic state, or the electromagnet 301 becomes less magnetic and has a weaker magnetic attraction force to the magnetic component 1002. The magnetic attraction force from the electromagnet 301 to the magnetic component 1002 is less than a resilience force of the spring 304, the first pull lever 302 moves towards the bottom of the slot under an effect of the resilience force of the spring 304, the first shift lever 303 is driven by the first pull lever 302 to rotate around the first shaft, and under pushing of the first shift lever 303, the card tray overcomes an elastic force of the clamping spring and a frictional force and is ejected.

In another optional implementation of this embodiment, after a card removal operation signal is received, the processing chip 19 further performs an identity verification operation on a user, and when the user passes the identity verification, controls the unlocking structure to release the card tray. The user identity verification is implemented by using any one or combination of a password, a fingerprint, an iris, voice, or appearance. This is not limited in this embodiment of the present invention. The superiority of a biometric recognition technology is apparent. For example, with a congenital feature, uniqueness, and invariance, a fingerprint makes authentication securer, more accurate, and more convenient. When in use, a fingerprint does not need to be memorized, and will not be lent, stolen, or lost.

### First background example

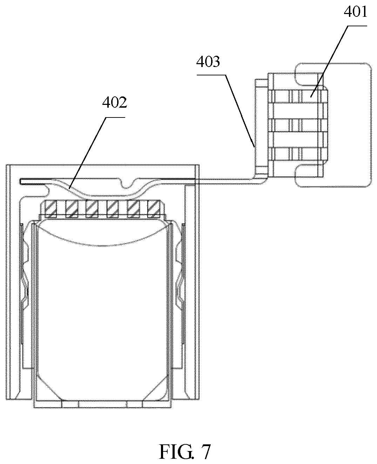

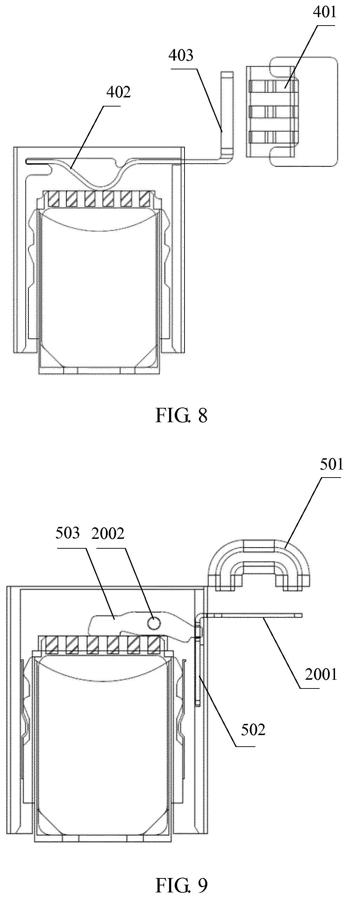

As shown in FIG. 7 and FIG. 8, the unlocking structure 18 includes an electromagnet 401 and a first elastic structure 402.

The processing chip 19 controls an operating state of the electromagnet 401. A coil is disposed inside the electromagnet 401. An electromagnetic force of the electromagnet 401 may be adjusted by changing a current passing through the coil.

Optionally, the electromagnet 401 is an electropermanent magnet. An electropermanent magnet is a magnet that can be controlled by electric power. Electric power is required only during magnetization or demagnetization. Then, the electropermanent magnet can keep magnetic without electric power. Optionally, the magnet is a permanent magnet. That is, the magnet can permanently maintain its own magnetism without an applied magnetic field.

A first end of the first elastic structure 402 is fastened at the bottom of the slot 201, a middle part of the first elastic structure 402 has a protrusion that points towards the opening of the slot, and a second end of the first elastic structure 402 has an extension body 403. The extension body 403 is made of a magnetic material, such as iron, cobalt, nickel, and another magnetic metal or magnetic alloy, and this is not limited. Two pole surfaces of the electromagnet 401 are opposite to two pole surfaces of the extension body 403. When no electricity is connected, magnetic poles (S and N) are opposite to opposite magnetic poles (S and N) of the extension body 403. When no electricity is connected, the electromagnet 401 generates a magnetic attraction force for the extension body 403, the first elastic structure 402 is in a stretched state under an effect of the magnetic attraction force, and a resilience force of the first elastic structure 402 is less than the magnetic attraction force.

In an optional implementation, during card removal, after a card removal operation signal is received, the processing chip 19 changes a power state (that is, controls a current of the coil) of the electromagnet 401, so that the electromagnet 401 enters a non-magnetic state, or the electromagnet 401 becomes less magnetic and has a weaker magnetic attraction force to the extension body 403. The magnetic attraction force from the electromagnet 401 to the extension body 403 is less than the resilience force of the first elastic structure 402, and the first elastic structure 402 restores to a natural state and ejects the card tray.

In another optional implementation, after a card removal operation signal is received, the processing chip 19 further performs an identity verification operation on a user, and when the user passes the identity verification, controls the unlocking structure to release the card tray. The user identity verification is implemented by using any one or combination of a password, a fingerprint, an iris, voice, or appearance. This is not limited. The superiority of a biometric recognition technology is apparent. For example, with a congenital feature, uniqueness, and invariance, a fingerprint makes authentication securer, more accurate, and more convenient. When in use, a fingerprint does not need to be memorized, and will not be lent, stolen, or lost.

### Second background example

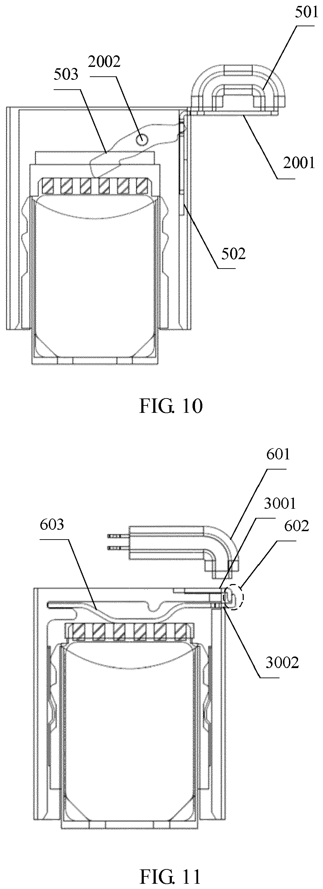

As shown in FIG. 9 and FIG. 10, the unlocking structure 18 includes an electromagnet 501, a second pull lever 502, and a second shift lever 503.

The processing chip 19 controls an operating state of the electromagnet 501. A coil is disposed inside the electromagnet 501. An electromagnetic force of the electromagnet 501 may be adjusted by changing a current passing through the coil. The second pull lever 502 slides in a same direction as the card tray 11. The second pull lever 502 has a bend 2001. The bend 2001 is made of a magnetic material, such as iron, cobalt, nickel, and another magnetic metal or magnetic alloy, and this is not limited. The bend 2001 is opposite to the electromagnet 501. The second pull lever 502 is hinged to the second shift lever 503, and the second shift lever 503 is fastened on the card holder through a second shaft 2002.

Optionally, an iron core of the electromagnet 501 is made of a soft magnetic material. When electricity is connected, the electromagnet 501 becomes magnetic, and when electricity is disconnected, the magnetism disappears. When no electricity is connected, the electromagnet 501 does not have a magnetic attraction force. When a user inserts a card, under a push from the outside, the card tray overcomes a counterforce of the clamping spring, so that the clamping part of the clamping spring stretches into the groove of the card tray, thereby completing assembly of the card tray.

In an optional implementation, during card removal, after a card removal operation signal is received, the processing chip 19 changes a power status of the electromagnet 501, so that the electromagnet 501 enters a magnetic state, attracts the bend of the second pull lever 502, and drives the second pull lever 502 to move towards the bottom of the slot. The second shift lever 503 is driven by the second pull lever to rotate around the second shaft. Under pushing of the second shift lever 503, the card tray overcomes an elastic force of the clamping spring and a frictional force and is ejected.

In another optional implementation, after a card removal operation signal is received, the processing chip 19 further performs an identity verification operation on a user, and when the user passes the identity verification, controls the unlocking structure to release the card tray. The user identity verification is implemented by using any one or combination of a password, a fingerprint, an iris, voice, or appearance. This is not limited. The superiority of a biometric recognition technology is apparent. For example, with a congenital feature, uniqueness, and invariance, a fingerprint makes authentication securer, more accurate, and more convenient. When in use, a fingerprint does not need to be memorized, and will not be lent, stolen, or lost.

### Third background example

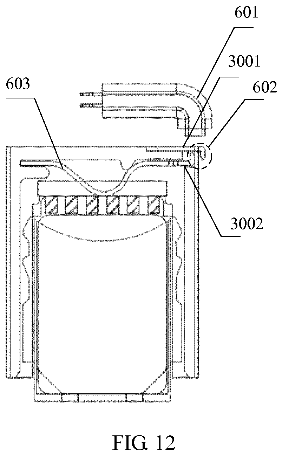

As shown in FIG. 11 and FIG. 12, the unlocking structure 18 includes an electromagnet 601, a buckle 602, and a second elastic structure 603.

The buckle 602 is disposed at the bottom of the slot 201 and the buckle 602 is opposite to the electromagnet 601. The processing chip 19 controls an operating state of the electromagnet 601. A coil is disposed inside the electromagnet 601. An electromagnetic force of the electromagnet 601 may be adjusted by changing a current passing through the coil. The buckle 602 specifically includes a first buckle part 3001 and a second buckle part 3002, and the first buckle part 3001 may be buckled with the second buckle part 3002, where the first buckle part 3001 is fastened at the bottom of the slot 201, the second buckle part 3002 is connected to a first end of the second elastic structure 603, a second end of the second elastic structure 603 is fastened at the bottom of the slot 201, and a middle part of the second elastic structure 603 has a protrusion that points towards the opening of the slot. Optionally, the second elastic structure 603 and the second buckle part 3002 are designed into one piece. The first buckle part 3001 is made of a magnetic material, such as iron, cobalt, nickel, and another magnetic metal or magnetic alloy, and this is not limited.

Optionally, an iron core of the electromagnet 601 is made of a soft magnetic material. When electricity is connected, the electromagnet 601 becomes magnetic, and when electricity is disconnected, the magnetism disappears. When no electricity is connected, the electromagnet 601 does not have a magnetic attraction force. When a user inserts a card, under a push from the outside, the card tray 11 overcomes a counterforce of the clamping spring, so that the clamping part of the clamping spring stretches into a card slot of the card tray, thereby completing assembly of the card tray. In addition, the second elastic structure is deformed, and the second buckle part 3002 is buckled with the first buckle part 3001.

In an optional implementation, during card removal, after a card removal operation signal is received, the processing chip 19 changes a power status of the electromagnet 601, so that the electromagnet 601 enters a magnetic state and attracts the first buckle part 3001, so that the second buckle part 3002 is separated from the first buckle part 3001, and the second elastic structure restores to a natural state and ejects the card tray.

In another optional implementation, after a card removal operation signal is received, the processing chip 19 further performs an identity verification operation on a user, and when the user passes the identity verification, controls the unlocking structure to release the card tray. The user identity verification is implemented by using any one or combination of a password, a fingerprint, an iris, voice, or appearance. This is not limited. The superiority of a biometric recognition technology is apparent. For example, with a congenital feature, uniqueness, and invariance, a fingerprint makes authentication securer, more accurate, and more convenient. When in use, a fingerprint does not need to be memorized, and will not be lent, stolen, or lost.

In the electronic device that is configured to implement the present invention, the processing chip may be a central processing unit (CPU), a general purpose processor, a digital signal processor (DSP), an application-specific integrated circuit (ASIC), a field programmable gate array (FPGA), or another programmable logical apparatus, a transistor logic device, a hardware component, or any combination thereof. In addition, the processing chip may be a combination that implements a computing function, for example, a combination that includes one or more microprocessors, or a combination of a DSP and a microprocessor.

It should be noted that in a case of no conflict, characteristics in the embodiments of the present invention can be arbitrarily and mutually combined.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An electronic device (10), comprising:
a card holder (12), a card tray (11), a processing chip (19), and an unlocking structure (18), wherein a slot (201) that accommodates the card tray (11) is disposed on the card holder (12), and at least one locking structure (202) is disposed in the slot;
the unlocking structure (18) comprises an electromagnet, the unlocking structure (18) is connected to the processing chip (19), the card tray (11) is configured to accommodate a card of the electronic device (10), and at least one locking part (101) that fits the locking structure (202) is disposed on the card tray (11); and
the processing chip (19) is configured to: when a card removal operation signal is received, verify a user identity, and when the user identity verification succeeds, control the unlocking structure (18) to release the card tray (11), wherein the user identity verification is implemented by using any one or combination of a password, a fingerprint, an iris, voice, or appearance, wherein:
the unlocking structure (18) further comprises a first pull lever (302), a first shift lever (303), a spring (304), and a mounting hole (305);
a first end of the spring (304) is fastened in the mounting hole (305), and a second end of the spring (304) is connected to a first end of the first pull lever (302);
a second end of the first pull lever (302) is hinged to the first shift lever (303), and the first shift lever (303) is fastened on the card holder through a first shaft (1001);
a magnetic component (1002) is fastened on a position that is on the first pull lever (302) and opposite to the electromagnet (301); and
the controlling the unlocking structure (18) to release the card tray (11) comprises: changing a power status of the electromagnet (301), so that a magnetic attraction force from the electromagnet (301) to the magnetic component (1002) is less than a resilience force of the spring (304), the first pull lever (302) moves towards the bottom of the slot under an effect of the resilience force of the spring (304), the first shift lever (303) is driven by the first pull lever (302) to rotate around the first shaft (1001), and the card tray (11) is ejected under pushing of the first shift lever (303).

2. The electronic device according to claim 1, **characterized by** the electronic device further comprises at least one of a touch-sensitive display, a fingerprint sensor, a microphone, or a camera.

3. A method of removing a card of an electronic device (10), the method comprising:
receiving a card removal operation signal;
verifying a user identity, and when the user identity verification succeeds, controlling an unlocking structure (18) to release a card tray (11) of the electronic device (10), wherein the user identity verification is implemented by using any one or combination of a password, a fingerprint, an iris, voice, or appearance;
wherein the electronic device (10) comprising a card holder (12), an unlocking structure (18), wherein a slot (201) that accommodates the card tray (11) is disposed on the card holder (12), and at least one locking structure (202) is disposed in the slot;
and the unlocking structure (18) comprises an electromagnet, the unlocking structure (18) is connected to the processing chip (19), the card tray (11) is configured to accommodate a card of the electronic device (10), and at least one locking part (101) that fits the locking structure (202) is disposed on the card tray (11), wherein:
the unlocking structure (18) further comprises a first pull lever (302), a first shift lever (303), a spring (304), and a mounting hole (305);
a first end of the spring (304) is fastened in the mounting hole (305), and a second end of the spring (304) is connected to a first end of the first pull lever (302);
a second end of the first pull lever (302) is hinged to the first shift lever (303), and the first shift lever (303) is fastened on the card holder through a first shaft (1001);
a magnetic component (1002) is fastened on a position that is on the first pull lever (302) and opposite to the electromagnet (301); and
the controlling the unlocking structure (18) to release the card tray (11) comprises: changing a power status of the electromagnet (301), so that a magnetic attraction force from the electromagnet (301) to the magnetic component (1002) is less than a resilience force of the spring (304), the first pull lever (302) moves towards the bottom of the slot under an effect of the resilience force of the spring (304), the first shift lever (303) is driven by the first pull lever (302) to rotate around the first shaft (1001), and the card tray (11) is ejected under pushing of the first shift lever (303).

4. The method of claim 3, **characterized by** the electronic device further comprises at least one of a touch-sensitive display, a fingerprint sensor, a microphone, or a camera.

## Patentansprüche

1. Elektronische Vorrichtung (10), umfassend:
einen Kartenhalter (12), ein Kartenfach (11), einen Verarbeitungschip (19) und eine Entriegelungsstruktur (18), wobei ein Steckplatz (201), der das Kartenfach (11) aufnimmt, an dem Kartenhalter (12) angeordnet ist und zumindest eine Verriegelungsstruktur (202) in dem Steckplatz angeordnet ist;
wobei die Entriegelungsstruktur (18) einen Elektromagneten umfasst, die Entriegelungsstruktur (18) mit dem Verarbeitungschip (19) verbunden ist, das Kartenfach (11) dazu ausgelegt ist, eine Karte der elektronischen Vorrichtung (10) aufzunehmen, und zumindest ein Verriegelungsteil (101), das in die Verriegelungsstruktur (202) passt, an dem Kartenfach (11) angeordnet ist; und
wobei der Verarbeitungschip (19) ausgelegt ist zum: wenn ein Kartenentfernungsvorgangssignal empfangen wird, Verifizieren einer Benutzeridentität, und wenn die Benutzeridentitätsverifizierung erfolgreich ist,
Steuern der Entriegelungsstruktur (18), um das Kartenfach (11) freizugeben, wobei die Benutzeridentitätsverifizierung durch Verwenden eines beliebigen von einem Kennwort, einem Fingerabdruck, einer Iris, einer Stimme oder einem Erscheinungsbild oder einer Kombination davon implementiert wird, wobei:
die Entriegelungsstruktur (18) ferner einen ersten Zughebel (302), einen ersten Schalthebel (303), eine Feder (304) und eine Montagebohrung (305) umfasst;
ein erstes Ende der Feder (304) in der Montagebohrung (305) befestigt ist und ein zweites Ende der Feder (304) mit einem ersten Ende des ersten Zughebels (302) verbunden ist;
ein zweites Ende des ersten Zughebels (302) klappbar an dem ersten Schalthebel (303) angebracht ist und der erste Schalthebel (303) an dem Kartenhalter durch eine erste Welle (1001) befestigt ist;
eine Magnetkomponente (1002) an einer Position befestigt ist, die an dem ersten Zughebel (302) und gegenüber dem Elektromagneten (301) ist; und
das Steuern der Entriegelungsstruktur (18), um das Kartenfach (11) freizugeben, umfasst: Ändern eines Leistungszustands des Elektromagneten (301), sodass eine magnetische Anziehungskraft von dem Elektromagneten (301) zu der Magnetkomponente (1002) niedriger als eine Federkraft der Feder (304) ist, sich der erste Zughebel (302) zu der Unterseite des Steckplatzes unter der Wirkung der Federkraft der Feder (304) bewegt, der erste Schalthebel (303) durch den ersten Zughebel (302) betätigt wird, um sich um die erste Welle (1001) zu drehen, und das Kartenfach (11) unter einem Drücken des ersten Schalthebels (303) ausgeworfen wird.

2. Elektronische Vorrichtung nach Anspruch 1, **dadurch gekennzeichnet, dass** die elektronische Vorrichtung ferner zumindest eines von einer berührungsempfindlichen Anzeige, einem Fingerabdrucksensor, einem Mikrofon oder einer Kamera umfasst.

3. Verfahren zum Entfernen einer Karte einer elektronischen Vorrichtung (10), das Verfahren umfassend:
Empfangen eines Kartenentfernungsvorgangssignals;
Verifizieren einer Benutzeridentität, und wenn die Benutzeridentitätsverifizierung erfolgreich ist, Steuern einer Entriegelungsstruktur (18), um ein Kartenfach (11) der elektronischen Vorrichtung (10) freizugeben, wobei die Benutzeridentitätsverifizierung durch Verwenden eines beliebigen von einem Kennwort, einem Fingerabdruck, einer Iris, einer Stimme oder einem Erscheinungsbild oder einer Kombination davon implementiert wird;
wobei die elektronische Vorrichtung (10) einen Kartenhalter (12), eine Entriegelungsstruktur (18) umfasst, wobei ein Steckplatz (201), der das Kartenfach (11) aufnimmt, an dem Kartenhalter (12) angeordnet ist und zumindest eine Verriegelungsstruktur (202) in dem Steckplatz angeordnet ist;
und die Entriegelungsstruktur (18) einen Elektromagneten umfasst, die Entriegelungsstruktur (18) mit dem Verarbeitungschip (19) verbunden ist, das Kartenfach (11) dazu ausgelegt ist, eine Karte der elektronischen Vorrichtung (10) aufzunehmen, und zumindest ein Verriegelungsteil (101), das in die Verriegelungsstruktur (202) passt, an dem Kartenfach (11) angeordnet ist, wobei:
die Entriegelungsstruktur (18) ferner einen ersten Zughebel (302), einen ersten Schalthebel (303), eine Feder (304) und eine Montagebohrung (305) umfasst;
ein erstes Ende der Feder (304) in der Montagebohrung (305) befestigt ist und ein zweites Ende der Feder (304) mit einem ersten Ende des ersten Zughebels (302) verbunden ist;
ein zweites Ende des ersten Zughebels (302) klappbar an dem ersten Schalthebel (303) angebracht ist und der erste Schalthebel (303) an dem Kartenhalter durch eine erste Welle (1001) befestigt ist;
eine Magnetkomponente (1002) an einer Position befestigt ist, die an dem ersten Zughebel (302) und gegenüber dem Elektromagneten (301) ist; und
das Steuern der Entriegelungsstruktur (18), um das Kartenfach (11) freizugeben, umfasst: Ändern eines Leistungszustands des Elektromagneten (301), sodass eine magnetische Anziehungskraft von dem Elektromagneten (301) zu der Magnetkomponente (1002) niedriger als eine Federkraft der Feder (304) ist, sich der erste Zughebel (302) zu der Unterseite des Steckplatzes unter der Wirkung der Federkraft der Feder (304) bewegt, der erste Schalthebel (303) durch den ersten Zughebel (302) betätigt wird, um sich um die erste Welle (1001) zu drehen, und das Kartenfach (11) unter einem Drücken des ersten Schalthebels (303) ausgeworfen wird.

4. Verfahren nach Anspruch 3, **dadurch gekennzeichnet, dass** die elektronische Vorrichtung ferner zumindest eines von einer berührungsempfindlichen Anzeige, einem Fingerabdrucksensor, einem Mikrofon oder einer Kamera umfasst.

## Revendications

1. Dispositif électronique (10), comprenant :
un porte-carte (12), un plateau de carte (11), une puce de traitement (19) et une structure de déblocage (18), dans lequel une fente (201) qui loge le plateau de carte (11) est disposée sur le porte-carte (12), et au moins une structure de blocage (202) est disposée dans la fente ;
la structure de déblocage (18) comprend un électroaimant, la structure de déblocage (18) est reliée à la puce de traitement (19), le plateau de carte (11) est configuré pour loger une carte du dispositif électronique (10), et au moins une partie de blocage (101) qui s'ajuste à la structure de blocage (202) est disposée sur le plateau de carte (11) ; et
la puce de traitement (19) est configurée pour : lorsqu'un signal de fonctionnement de retrait de carte est reçu, vérifier l'identité de l'utilisateur, et lorsque la vérification de l'identité de l'utilisateur réussit, commander à la structure de déblocage (18) de libérer le plateau de carte (11), dans lequel la vérification de l'identité de l'utilisateur est mise en œuvre en utilisant l'un quelconque ou une combinaison d'un mot de passe, d'une empreinte digitale, d'un iris, d'une voix ou d'une apparence, dans lequel :
la structure de déblocage (18) comprend en outre un premier levier de traction (302), un premier levier de vitesse (303), un ressort (304) et un trou de montage (305) ;
une première extrémité du ressort (304) est fixée dans le trou de montage (305), et une seconde extrémité du ressort (304) est reliée à une première extrémité du premier levier de traction (302) ;
une seconde extrémité du premier levier de traction (302) est articulée sur le premier levier de vitesse (303), et le premier levier de vitesse (303) est fixé sur le porte-carte par le biais d'un premier arbre (1001) ;
un composant magnétique (1002) est fixé sur une position qui se trouve sur le premier levier de traction (302) et opposée à l'électroaimant (301) ; et
la commande à la structure de déblocage (18) de libérer le plateau de carte (11) comprend : le changement d'un état de puissance de l'électroaimant (301), de sorte qu'une force d'attraction magnétique de l'électroaimant (301) au composant magnétique (1002) est inférieure à une force de résilience du ressort (304), le premier levier de traction (302) se déplace vers la partie inférieure de la fente sous l'effet de la force de résilience du ressort (304), le premier levier de vitesse (303) est commandé par le premier levier de traction (302) pour tourner autour du premier arbre (1001), et le plateau de carte (11) est éjecté sous l'effet de la poussée du premier levier de vitesse (303).

2. Dispositif électronique selon la revendication 1, **caractérisé par le fait que** le dispositif électronique comprend en outre au moins un élément parmi un affichage tactile, un capteur d'empreinte digitale, un microphone ou une caméra.

3. Procédé de suppression d'une carte d'un dispositif électronique (10), le procédé comprenant :
la réception d'un signal de fonctionnement de retrait de carte ;
la vérification d'une identité d'utilisateur, et lorsque la vérification de l'identité de l'utilisateur réussit, la commande à une structure de déblocage (18) de libérer un plateau de carte (11) du dispositif électronique (10), dans lequel la vérification de l'identité de l'utilisateur est mise en œuvre en utilisant l'un quelconque ou une combinaison parmi un mot de passe, une empreinte digitale, un iris, une voix ou une apparence ;
dans lequel le dispositif électronique (10) comprend un porte-carte (12), une structure de déblocage (18), dans lequel une fente (201) qui loge le plateau de carte (11) est disposée sur le porte-carte (12), et au moins une structure de blocage (202) est disposée dans la fente ;
et la structure de déblocage (18) comprend un électroaimant, la structure de déblocage (18) est reliée à la puce de traitement (19), le plateau de carte (11) est configuré pour loger une carte du dispositif électronique (10) et au moins une partie de blocage (101) qui s'ajuste à la structure de blocage (202) est disposée sur le plateau de carte (11), dans lequel :
la structure de déblocage (18) comprend en outre un premier levier de traction (302), un premier levier de vitesse (303), un ressort (304) et un trou de montage (305) ;
une première extrémité du ressort (304) est fixée dans le trou de montage (305), et une seconde extrémité du ressort (304) est reliée à une première extrémité du premier levier de traction (302) ;
une seconde extrémité du premier levier de traction (302) est articulée sur le premier levier de vitesse (303), et le premier levier de vitesse (303) est fixé sur le porte-carte par le biais d'un premier arbre (1001) ;
un composant magnétique (1002) est fixé sur une position qui se trouve sur le premier levier de traction (302) et opposée à l'électroaimant (301) ; et
la commande à la structure de déblocage (18) de libérer le plateau de carte (11) comprend : le changement d'un état de puissance de l'électroaimant (301), de sorte qu'une force d'attraction magnétique de l'électroaimant (301) au composant magnétique (1002) est inférieure à une force de résilience du ressort (304), le premier levier de traction (302) se déplace vers la partie inférieure de la fente sous l'effet de la force de résilience du ressort (304), le premier levier de vitesse (303) est commandé par le premier levier de traction (302) pour tourner autour du premier arbre (1001), et le plateau de carte (11) est éjecté sous l'effet de la poussée du premier levier de vitesse (303).

4. Procédé selon la revendication 3, **caractérisé par le fait que** le dispositif électronique comprend en outre au moins un élément parmi un affichage tactile, un capteur d'empreinte digitale, un microphone ou une caméra.
